# EUROPEAN PATENT SPECIFICATION

(11) **EP 0 573 234 B1**
(45) Date of publication and mention of the grant of the patent: **14.08.1996**
(21) Application number: 93304194.9
(22) Date of filing: 28.05.1993
(51) Int. Cl.: B60T 13/57, B60T 13/563

(54) **Improvements in pneumatically-operated boosters for vehicle braking systems**
Pneumatische Kraftverstärker für Fahrzeugbremsanlagen
Amplificateur pneumatique pour systèmes de freinage de véhicules

(30) Priority: 04.06.1992 GB 9211850
(43) Date of publication of application: 08.12.1993
(73) Proprietor: Lucas Industries public limited company, Solihull, West Midlands B90 4JJ (GB)
(72) Inventor: Byrnes, Sean, Kings Heath, Birmingham B14 7ND (GB)
(74) Representative: Spall, Christopher John

(56) References cited:
- EP-A- 0 340 059

## Description

This invention relates to improvements in pneumatically-operated boosters for vehicle braking systems of the kind in which a wall is movable in a booster housing when subjected to pressure differential in order to augment a brake-applying force from a pedal which, in turn, is applied to a master cylinder.

Problems exist in installing boosters of the kind set forth in the limited space available in engine compartments of vehicles. It is therefore desirable to provide boosters which are radially compact and which, in combination with an hydraulic master cylinder, are also compact axially.

It is known from EP-A-0 340 059 to provide a booster according to the preamble of claim 1.

The present invention is therefore concerned with improvements aimed at reducing the radial and axial dimensions of a booster of a given capacity.

According to our invention in a booster of the kind set forth wherein a back stop for taking the force on a return spring and other loads comprises an abutment member disposed within the housing of the booster and having an inwardly directed projection with which a part of the valve mechanism cooperates and which is disposed rearwardly of a rear end wall of the housing, the abutment member comprises an annular ring secured to the inner surface of a rearwardly directed flange with the projection defined by an inwardly directed radial flange at the rear end of the ring, and characterised in that the ring is secured in position by a spragging engagement with the rearwardly directed flange.

The position of the projection determines the retract position of the components of the valve mechanism and, in consequence, the effective axial length of the booster. Furthermore, the provision of the abutment member with such an engagement simplifies the units construction.

In addition the provision of the abutment member enables us to reduce the diameter of a flange projecting rearwardly from the rear end wall of the housing with the result that the flange can be received in an opening in a bulkhead of correspondingly reduced diameter. This therefore facilitates installation in an engine compartment.

The retracted position of the components may be determined by the cooperation of a key which projects radially from a piston forming part of the valve mechanism.

The flange on the abutment member may be of single thickness or it may be of double thickness in order to increase its strength.

Some embodiments in accordance with our invention are illustrated in the accompanying drawings in which:-
Figure 1 is a longitudinal section through a tandem booster of the vacuum-suspended type;
Figure 2 is a longitudinal section through a modified valve mechanism for use in the booster of Figure 1;
Figure 3 is a section through the valve mechanism of the booster of Figure 1 but showing a modification; and
Figure 4 illustrates a modification of the key back stop illustrated in Figure 3.

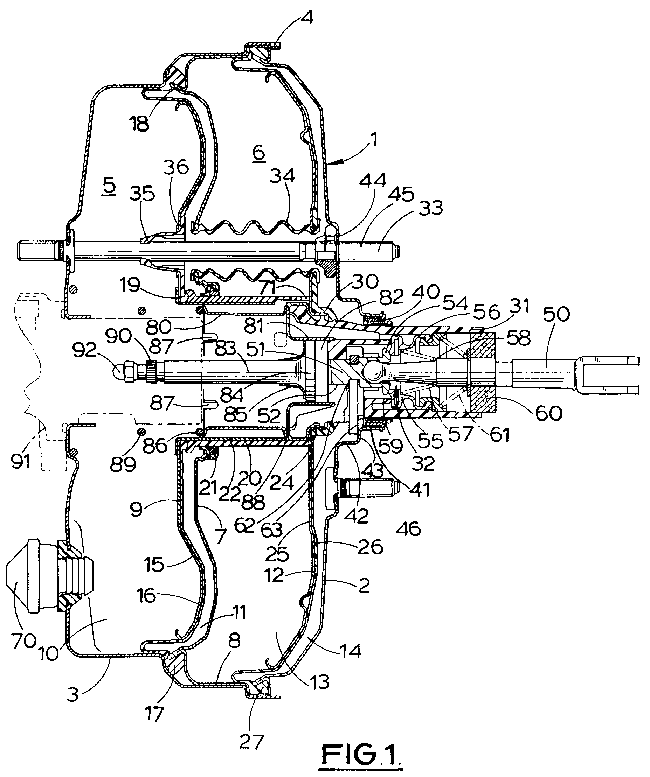

The vacuum-suspended tandem pneumatic booster illustrated in Figure 1 of the drawings comprises a housing 1 comprising a pair of complementary shells 2 and 3, each of dished outline. The two shells are secured together at their peripheral edges by a coupling 4, suitably defined by a crimping or similar operation. The interior of the housing is divided into front and rear compartments 5 and 6 by means of an annular partition 7. The partition 7 has a peripheral skirt 8 which lies against a complementary portion of the wall of the shell 3 and is directed towards the coupling ring 4.

A first movable wall 9 divides the front compartment 5 into a front chamber 10 of constant pressure and a rear variable pressure chamber 11. Similarly a second movable wall 12 divides the rear compartment into a front constant pressure chamber 13, and a rear variable pressure chamber 14.

The movable wall 9 comprises a piston 15 supported by a rolling diaphragm 16. An annular bead 17 at the outer peripheral edge of the diaphragm 16 provides a seal between the shell 3 and the partition 7, with the bead 17 retained in position by an annular projection 18 of double thickness which projects forwardly from, and diverges outwardly with respect to, the partition 7. An annular bead 19 at the radially innermost end of the diaphragm 16 is secured by a cylindrical central sleeve 20 which is adapted to slide through an annular seal 21 at the inner end of the partition 7, by means of an internal sleeve member 22 co-axial with, and located within, the sleeve 20. The sleeve 20 and the sleeve member 22 define a sleeve sub-assembly.

In a modification instead of being a separate component, the internal sleeve member 22 is deep drawn from the material of the piston 15 to form a rearwardly directed cylindrical extension.

The movable wall 12 comprises a piston 25 abutting against the sleeve 20 and the sleeve member 22 is secured to a central hub member 31 by a coupling 24 suitably by a crimping or similar operation. The piston 25 is supported by a rolling diaphragm 26 and an annular bead 27 at the outer peripheral edge of the diaphragm 26 forms a seal between complementary parts of the annular flange 8 of the partition 7, and the walls of the shells 2 and 3 where they are connected by the coupling 4. An axially extending rearwardly directed bead 30 at the inner end of the diaphragm 26 forms a sealing connection with the external surface of a central hub member 31 which projects rearwardly from the shell 2 and defines a housing for a valve mechanism 32 for controlling operation of the booster.

The movable walls 9 and 12 are adapted to be assembled to the central sleeve 20 and are then locked in position by inserting the sleeve member 22 through the sleeve 20 so that the inner end of the wall 9 is trapped between the end of the sleeve 20 and an outwardly directed flange at the outer end of the sleeve member 22. An inwardly directed radial flange at the inner end of the sleeve member 22 is then connected to the hub member 31 by the coupling 24, suitably by crimping. This forms an assembly comprising the two movable walls 9 and 12 and the hub member 31 which defines a housing for the valve mechanism 32.

A tie-rod 33 extends axially through the housing and is connected adjacent to axially projecting opposite end portions to the two shells 2 and 3. The tie-rod 33 is adapted for mounting the booster in an engine compartment and for providing a mounting for a master cylinder so that it can be carried direct from a bulk head through the tie-rod 33.

The tie-rod 33 projects through a convoluted bellows 34 of which opposite ends are sealed around aligned openings in the movable wall 12 and the fixed partition 7, and with the movable wall 9 connected to the tie-rod 33 by means of a sealing boot 35 which is integral with and projects forwardly from the diaphragm 16 and through a complementary opening 36 in the piston 15. We therefore provide a one-piece member comprising the diaphragm 16 and the boot 35.

The hub member 31 is of stepped outline and projects rearwardly from the housing through a sealed opening 40 in which it is axially movable through a short distance. The opening 40 is defined within a flange portion 41 of smaller diameter at the outer end of an inner portion 42 of greater diameter, the two portions 41 and 42 being interconnected by means of a radial web 43. The external diameter of the flange portion 42 is of a suitable diameter as to be received in a complementary opening in the bulkhead of the vehicle against which an annular bearing face 44 is adapted to be clamped by means of nuts screwed onto a threaded portion 45 of the tie-rod 33 and a threaded stud 46 projecting rearwardly from the shell 2 in a diametrically opposed position with respect to the threaded portion 45.

The valve mechanism 32 comprises a pedal-operated rod 50 coupled at its inner end to a poppet valve member 51 comprising a piston which is guided to slide in a axial bore 52 in the hub member 31. The valve member 51 is formed at its outer most end with a valve seating 54 of part-spherical outline. An annular valve head 55 at the inner end of a flexible valve member 56 is urged by means of a spring 57 abutting against a shoulder 58 on the rod 50 towards the valve head 54 and an annular valve head 59 on the hub member 31. The peripheral edge of the valve head 55 is provided with a plurality of angularly spaced axially extending ribs 49 which facilitate movement of the bead 55 within the hub member 31 and centralise it with respect to the valve member 51. Air is admitted into the valve device 32 through a filter 60 in the outer end of the hub member 31 and which forms an abutment for a conical helical spring 61 acting as a return spring for the rod 50 and to hold the valve member 56 against an abutment in the hub member 31.

The poppet valve member 51 is provided with a radial slot 62, and a key 63 fitted into the slot 62 projects radially from the valve member 51. The key 63 is so positioned as to allow free displacement of the valve member 51 with respect to the hub member 31 during operation of the booster, but to abut against the shell 2 on release of the pedal to define a balanced position for the valve mechanism 32.

The two constant pressure chambers 10 and 13 are connected to vacuum, suitably the inlet manifold of a vehicle, through a non-return valve connection 70 in the wall of the shell 3 with the two chambers 10 and 13 permanently interconnected through the centre of the sleeve 20 and a port 71 at the inner end of the sleeve 20. In a normal brakes off position the variable pressure chambers 11 and 14 are held at a slight atmospheric pressure through the interior of the boot 34 and the valve mechanism 32 since, in such a position, the valve head 55 is just contacting the seating 59 by the engagement of the seating 54 with the valve head 55 in the position determined by the engagement of the key 63 with the shell 2.

A pressed metal core 80 is disposed within the bore of the sleeve member 22. The core 80 is of stepped outline having a rearwardly directed bore portion 81 of reduced diameter forming a support for a reaction disc 82 through which the piston 51 acts on a axially extending output member 83. The output member 83 has an enlarged head 85 which is trapped between the reaction disc 82 and a retainer 84 having a spragged engagement within the bore of the reduced diameter portion 81.

The core 80 is located in the sleeve member 22 at two axially spaced positions defined by circumferentially extending ribs 86 and 88 on the core. The innermost rib 86 is discontinuous being formed by arcuate regions defined between angularly spaced notches 87 and forms an abutment for a return spring 89 which holds the core 80 in a retracted position in abutment against the hub member 31. The retracted position for the components is therefore determined by the engagement of the key 63 with the shell 2.

The output rod 83 has a splined portion 90 adjacent to its outer end for non-rotational keying engagement with a complementary input component member of a master cylinder of the overhung type of which the body 91 shown in chain dotted outline is sealingly received in the inner end of the housing 1 of the booster. The component member of the master cylinder can be set by rotation of a rotatable member 92 at the free end of the rod 83.

In a preferred method of assembling the booster, the movable wall 9 is fitted into the shell 3 with the sleeve 20 encircling the sleeve member 22 to trap a thickening at the inner edge of the diaphragm 16 against the plate 9, and with the tie-rod 33 extending through the boot 35. The sleeve 20 and the sleeve member 22 are then connected together suitably by welding. The partition 7 is then inserted into the open end of the shell 3 with the seal 21 sealingly engaging with the outer surface of the sleeve 20, and the partition 7 trapping a thickening at the outer of the diaphragm 15 against the wall of the shell 3. The core 80 and the hub member 31 containing the valve mechanism 32 are next inserted into the open end of the shell 3 with the core 80 slidingly received within the sleeve member 22, and the sleeve member 22 secured to the hub member 31, suitably by crimping. The movable wall 12 is fitted into the shell 3 with a thickening at the inner edge of the diaphragm 26 secured to the sleeve member 22 and the hub member 31. After the shell 2 is fitted into the open end of the shell 3 with the bead 27 clamped between complementary parts of the two shells 3 and 2 and the flange 8, the coupling ring 4 is fitted to the housing to secure the shells 3 and 2 together, thereby completing the assembly.

The assembly of the master cylinder 91 and the booster is therefore axially compact.

In operation of the booster the valve seat 59 is already in abutment with the valve head 55 as the valve mechanism 32 is in the balanced position due to the engagement of the key 63 with the radial web 43. A brake-applying force applied to the rod causes the seating 54 to separate from the valve head 55 with the result that air is admitted into the two rear compartments 11 and 14 to energise the booster. Thereafter the booster operates in a known manner with the two movable walls 9 and 12 moving in tandem to augment the force applied to the output member 83 in response to the pedal-operating force.

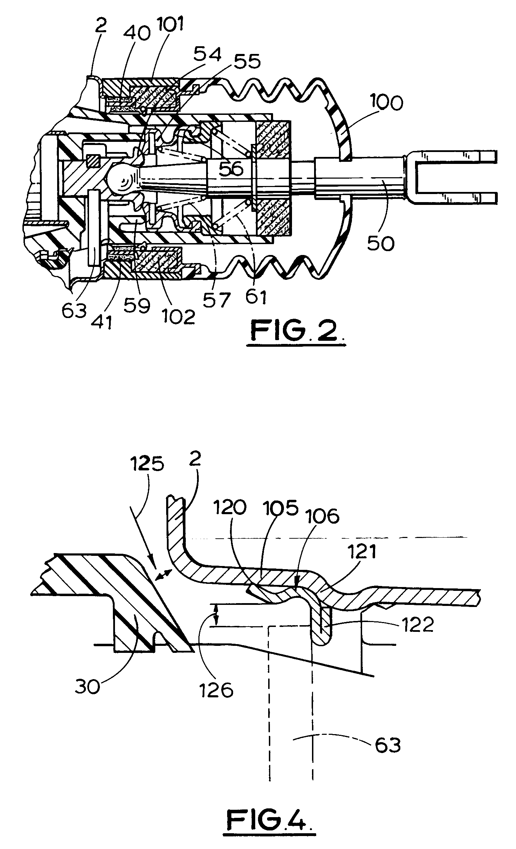

In the modified valve mechanism illustrated in Figure 2 of the accompanying drawings a sealing boot 100 provides a seal between the pedal-operated rod 50 and an annular collar 101 mounted on the shell 2. The collar 101 also forms a mounting for a radial air inlet filter 102 through which air enters the interior of the boot 100, and hence the booster. We have found that admission of air in this direction makes the booster more silent in operation.

The construction and operation of the valve mechanism is otherwise the same as that of Figure 1 and corresponding reference numerals have been applied to corresponding parts.

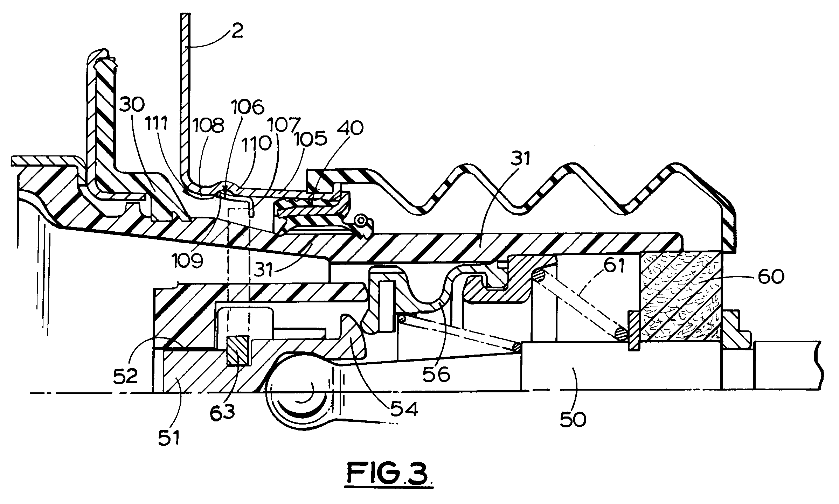

In order to install the booster of Figure 1 in an opening in the bulkhead which is of smaller diameter, and thereby conserve space in a radial direction, as illustrated in Figure 3 of the drawings, the shell 2 has a single rearwardly directed annular flange 105 which tapers in a direction away from the shell 2, and a separate key back stop 106 is provided for the key 63 in place of the radial web 43. As illustrated the back stop 106 comprises a radial flange 107 extending inwardly from the outer end of a sprag ring 108 having a plurality of angularly spaced teeth 109 which are received in a circumferentially extending recess 110 in the inner face of the shell 2. The ring 108 is held against axial movement in the opposite direction by the engagement of an outwardly directed arcuate portion 111 with the curved region between the shell 2 and the flange 105.

In a modification shown in Figure 4 of the accompanying drawings, the key back stop 106 comprises a spring member 120 of flattened S outline having a spring loaded engagement with the interior of the annular flange 105. The free inner end of the spring member 120 is spragged into the wall of the flange 105 to hold the member 120 in abutment against a rib 121 pressed into the shell 2. A radial flange 122 of double thickness projects inwardly from the inner end of the member 120 to define the abutment for the key 63.

Moving the key back stop 106 rearwardly with respect to the shell 2 in comparison with the arrangement of Figure 3 increases the air flow between the bead 30 and the shell 2 since the passage 125 defined therebetween is not obstructed in any way by the back stop 106 as in the embodiment of Figure 3.

In addition, the use of a radial flange 122 of double thickness increases the strength of the abutment for the key. This enables us to increase the radial clearance 126 between the key 63 and the member 120, in turn reducing any tendency for the key 63 to foul against the abutment stop 106.

## Claims

1. A pneumatically-operated booster for a vehicle braking system in which a wall (9, 12) is movable in a booster housing (1) when subjected to pressure differential in order to augment a brake-applying force from a pedal which, in turn, is applied to a master cylinder, wherein a back stop for taking the force on a return spring and other loads comprises an abutment member (106) disposed within the housing (1) of the booster and having an inwardly directed projection (107, 122) with which a part of the valve mechanism (63) cooperates and which is disposed rearwardly of a rear end wall (2) of the housing, the abutment member (106) comprises an annular ring secured to the inner surface of a rearwardly directed flange (105) with the projection defined by an inwardly directed radial flange at the rear end of the ring (106), and characterised in that the ring (106) is secured in position by a spragging engagement with the rearwardly directed flange (105).

2. A booster according to claim 1, characterised in that the retracted position of the components is determined by the cooperation of the key (63) which projects radially from a piston (51) forming part of the valve mechanism (32).

3. A booster according to claim 1 or claim 2 characterised in that the spragging engagement is with a circumferentially extending recess (110).

4. A booster according to any preceding claim characterised in that the abutment member (106) is further restrained against axial movement in the opposing direction by the members (106) abutment with a rib (121) or arcuate portion (111) of the shell (2).

5. A booster according to any of claims 1-4, characterised in that the abutment member (106) is of double thickness.

## Patentansprüche

1. Pneumatischer Kraftverstärker für eine Fahrzeugbremsanlage, bei dem eine Wand (9, 12) in einem Verstärkergehäuse (11) verschiebbar ist, wenn sie einer Druckdifferenz ausgesetzt ist, um eine Bremsbetätigungskraft von einem Pedal zu verstärken, die dann einem Hauptzylinder zugeführt wird, wobei ein Gegenhalter zum Aufnehmen der Kraft einer Rückholfeder und anderer Belastungen einen Anschlag (106) aufweist, der innerhalb des Gehäuses (1) des Kraftverstärkers angeordnet ist und einen nach innen gerichteten Vorsprung (107, 122) aufweist, mit dem ein Teil der Ventilanordnung (32) zusammenwirkt und der hinter einer hinteren Endwand (2) des Gehäuses angeordnet ist, wobei der Anschlag (106) einen an der Innenfläche eines nach hinten gerichteten Flansches (105) befestigten kreisförmigen Ring aufweist, wobei der Vorsprung durch einen nach innen gerichteten radialen Flansch am hinteren Ende des Rings (106) bestimmt ist, dadurch gekennzeichnet, daß der Ring (106) durch Spreizeingriff mit dem nach hinten gerichteten Flansch (105) in Stellung gehalten ist.

2. Kraftverstärker nach Anspruch 1, dadurch gekennzeichnet, daß die Ruhestellung der Bauteile durch Mitwirken des Splints (63) bestimmt ist, der radial von einem Kolben (51) wegragt, der Teil der Ventilanordnung (32) ist.

3. Kraftverstärker nach Anspruch 1 oder 2, dadurch gekennzeichnet, daß der Spreizeingriff mit einer am Umfang verlaufenden Ausnehmung (110) erfolgt.

4. Kraftverstärker nach einem der vorhergehenden Ansprüche, dadurch gekennzeichnet, daß der Anschlag (106) gegen axiale Bewegung in der entgegengesetzten Richtung durch Anstoßen des Teils (106) an die Rippe (121) bzw. das gebogene Teil (111) des Gehäuses (2) weiter gesperrt ist.

5. Kraftverstärker nach einem der Ansprüche 1-4, dadurch gekennzeichnet, daß der Anschlag (106) doppelte Dicke aufweist.

## Revendications

1. Surpresseur actionné pneumatiquement pour système de freinage de véhicule dans lequel une paroi (9, 12) est mobile dans un boîtier de surpresseur (1) lorsqu'elle est soumise à un différentiel de pression, afin d'augmenter la force d'application des freins provenant d'une pédale, force qui, à son tour, est appliquée à un maître cylindre, surpresseur dans lequel un butée arrière destinée à absorber la force d'un ressort de rappel et d'autres charges comporte un élément de butée (106) disposé à l'intérieur du boîtier (1) du surpresseur et ayant une saillie dirigée vers l'intérieur (107, 122) avec laquelle coopère une partie du mécanisme de vanne (63) et qui est disposée en arrière d'une paroi d'extrémité arrière (2) du boîtier, l'élément de butée (106) comportant un anneau circulaire fixé sur la surface intérieure d'un rebord dirigé vers l'arrière (105), la saillie étant définie par un rebord radial dirigé vers l'intérieur situé au niveau de l'extrémité arrière de l'anneau (106), et caractérisé en ce que l'anneau (106) est fixé en position par mise en prise de calage avec le rebord dirigé vers l'arrière (105).

2. Surpresseur selon la revendication 1, caractérisé en ce que la position rétractée des composants est déterminée par la coopération de la clavette (63) qui fait saillie radialement à partir d'un piston (51) formant une partie du mécanisme de vanne (32).

3. Surpresseur selon la revendication 1 ou 2, caractérisé en ce que la mise en prise de blocage est effectuée avec une cavité s'étendant circonférentiellement (110).

4. Surpresseur selon l'une quelconque des revendications précédentes, caractérisé en ce que l'élément de butée (106) est en outre limité vis à vis d'un déplacement axial dans le sens opposé par les éléments (106) venant en butée avec une nervure (101) ou une partie en arc de cercle (111) de l'enveloppe (2).

5. Surpresseur selon l'une quelconque des revendications 1 à 4, caractérisé en ce que l'élément de butée (106) a une double épaisseur.
